# EUROPEAN PATENT SPECIFICATION

(11) **EP 0 595 938 B1**
(45) Date of publication and mention of the grant of the patent: **10.09.1997**
(21) Application number: 92915993.7
(22) Date of filing: 17.07.1992
(51) Int. Cl.: C03B 35/20, C03B 27/044

(54) **APPARATUS FOR SUPPORTING A GLASS SHEET**
Vorrichtung zum Tragen einer Glasscheibe
APPAREIL DE SUPPORT POUR PLAQUE DE VERRE

(30) Priority: 22.07.1991 US 734005
(43) Date of publication of application: 11.05.1994
(73) Proprietor: FORD-WERKE AKTIENGESELLSCHAFT, 50725 Köln (DE); FORD FRANCE S. A., 92506 Rueil-Malmaison Cédex (FR); FORD MOTOR COMPANY LIMITED, Brentwood, Essex CM13 3BW (GB)
(72) Inventor: KUNA, Kenneth, Joseph, Plymouth, MI 48170 (US)
(74) Representative: Messulam, Alec Moses
(86) International application number: EP9201627
(87) International publication number: WO9302017

(56) References cited:
- FR-A- 2 613 710
- US-A- 4 556 407
- US-A- 4 556 408

## Description

This invention relates generally to a glass sheet supporting apparatus. More particularly, the invention relates to a mechanical ring structure for supporting a glass sheet during a glass tempering operation. The inventive ring configuration allows increased tempering fluid flow at the peripheral marginal portion of the under-side major surface of the glass sheet (hereinafter referred to as the "peripheral marginal surface" of the glass sheet), and minimises conductive heat transfer from the glass sheet to the ring thereby improving the tempered characteristics of the glass sheet.

It is generally known in the art of manufacturing automotive glazings to heat a glass templet to a temperature above its plastic set temperature, usually about 1,200°F, then form the templet to its desired curvature by either gravity forming or press bending the glass, and finally rapidly quench the formed glass sheet by directing streams of a tempering fluid, usually air, against the major surfaces thereof. During the tempering operation, it is known to support the formed glass sheet on a support ring, comprising a rigid structure conforming generally in outline and elevation to the peripheral marginal surface of the formed glass sheet. In some operations, the support ring is initially used for press bending the glass templet, or as a mold for gravity forming the glass templet to the desired final curvature, prior to its use as a tempering support ring.

During a glass tempering operation, blasts of tempering fluid rapidly cool the formed glass sheet in all areas, except the area of contact between the glass sheet and the support ring where cooling is retarded due to restricted tempering fluid flow. Tempering fluid is initially directed perpendicularly against the two major surfaces of the glass sheet, but the flow of tempering fluid is forced by the glass sheet to change direction and move parallel to the major surfaces, escaping at the periphery of the glass sheet. The flow of tempering fluid parallel to the under-side major surface of the glass sheet is hindered, however, by most tempering ring configurations, causing the peripheral marginal surface of the glass sheet to cool more slowly. Thus, the majority of the cooled glass sheet is stressed in compression, while the area of the glass sheet which is adjacent the support ring is stressed in tension. This stress imbalance often leads to spontaneous breakage of the ultimately produced formed and tempered glass sheet. Moreover, uniform cooling of the surfaces of the formed glass sheet is practically impossible due to conductive heat transfer which occurs adjacent the areas of direct contact between the formed glass sheet and the support ring.

The support rings disclosed in the prior art generally were designed to allow increased tempering fluid flow and to minimise conductive heat transfer in the vicinity of the contact area between the formed glass sheet and support ring.

U.S. Patent No. 3,089,319 to Carson et al. discloses a glass sheet gravity forming apparatus, including a support ring having solid metal rails which contact the peripheral marginal surface of the formed glass sheet. The device, having the formed glass sheet resting thereon, may be shuttled to a tempering station where blasts of tempering air are directed at the major surfaces of the glass sheet. The patent states that there is a compelling need for an absolute minimum of contact between the formed glass sheet and the support ring, to effect proper, uniform tempering.

U.S. Patent No. 3,846,104 to Seymour discloses apparatus for handling glass sheets during shaping and cooling, including a conventional tempering ring with serrations and apertures therein to reduce the glass sheet contact area and to increase the flow therearound of tempering air.

U.S. Patent No. 3,973,943 to Seymour discloses a support ring for tempering a formed glass sheet, wherein a serrated and apertured non-metallic ring is affixed to a conventional tempering ring. The peripheral marginal surface of the hot, formed glass sheet contacts only the non-metallic material during the tempering operation so as to minimise conductive heat transfer from the glass sheet to the support ring.

U.S. Patents Nos. 2,408,526 to Minton and 3,310,273 to Seymour disclose formed glass sheet support rings having asbestos and wire mesh, respectively, placed over rigid support members, to reduce the amount of heat conducted from the glass sheets to the support rings.

U.S. Patents Nos. 4,556,407 and 4,556,408 to Fecik et al. disclose formed glass sheet tempering rings having discrete upstanding support members including non-metallic support blocks which contact the peripheral marginal surfaces of the glass sheets. US-A-4,556,408 discloses an apparatus including a support rail conforming in outline and elevation to the peripheral marginal surface of a glass sheet and a plurality of generally parallel, horizontal, spaced-apart members mounted on the support rail.

Finally, U.S. Patent No. 4,812,157 to Smith discloses a formed glass sheet support ring, comprising a support rail having a plurality of adjustable, upstanding stanchions with convex apecies.

It would be desirable to create a glass sheet support ring configuration which would allow for greater tempering fluid flow therearound while minimising the conductive heat transfer from the peripheral marginal surface of the formed glass sheet to the support ring. Such a ring could be used exclusively for supporting a formed glass sheet during a tempering operation, or could additionally be used as a press rail in a glass sheet press bending operation or as a mold ring in a glass sheet gravity forming operation.

According to the present invention, there is provided apparatus for supporting a glass sheet comprising a support ring including a support rail generally conforming in outline and elevation to the peripheral marginal surface of the glass sheet, and a plurality of generally parallel, horizontal, spaced-apart members characterised in that the spaced-apart members are cantilevered support arms extending from a line which is parallel to the support rail inwardly toward a point medial the support rail and the apparatus further includes means for affixing the distal portions of the cantilevered support arms to the support rail.

Accordant with the present invention, a support ring for supporting a formed glass sheet during a tempering operation, which support ring allows for greater tempering fluid flow therearound while minimising conductive heat transfer from the peripheral marginal surface thereof to the ring, has surprisingly been discovered.

The cantilevered support arms are preferably made from a corrosion-resistant material, e.g., stainless steel, and may be shaped so as to result in line or surface contact with the peripheral marginal surface of a glass sheet supported thereon.

The apparatus of the present invention is particularly well suited for supporting a formed glass sheet thereon during a tempering operation.

The invention will now be described further, by way of example, with reference to the accompanying drawings, in which:
Fig. 1 is a perspective view of a glass sheet support frame including a support ring embodying the features of the present invention;
Fig. 2 is an enlarged fragmentary view of the glass sheet engaging portion of a support ring according to the present invention; and
Fig. 3 is an enlarged fragmentary view of an embodiment of the support ring of the present invention, including cantilevered support arms which result in line contacts with the peripheral marginal surface of a glass sheet resting thereon.

The present invention is directed to a ring for supporting a glass sheet, by contact with the peripheral marginal portion of the under-side major surface of the glass sheet. The use of cantilevered support arms provides for substantially uniform tempering, by allowing increased tempering fluid flow near the peripheral marginal surface of the glass sheet and by minimising conductive heat transfer from the hot glass sheet to the support ring.

Generally, a roller-hearth or gas-hearth furnace is used to heat glass sheets prior to forming and tempering operations. The glass sheets are advanced along a horizontal path through the furnace to a forming station, whereat the glass sheets are formed by well-known processes such as, for example, press bending or gravity forming utilising gas-hearth forming blocks or a gravity mold. Following the forming of the glass sheets to a precise desired curvature, the formed glass sheets are conveyed on a support ring through a tempering station, whereat the surfaces of the formed glass sheets are quickly cooled by passage thereof between opposed tempering fluid blastheads. Finally, the tempered glass sheets are conveyed out from the tempering station to an unloading station, whereat the glass sheets are removed from the support ring and deposited on a take-away roller conveyor.

The configuration of the support ring used during the tempering operation is critical for achieving uniform, stress-imbalance-free tempering of the glass sheet. The support ring, having the formed glass sheet resting thereon, is advanced generally horizontally between blastheads comprising a plurality of nozzles adapted to direct opposed streams of a cooling fluid such as, for example, moist air toward and against the opposite major surfaces of the glass sheet. The inventive support ring provides minimum contact with the peripheral marginal surface of the glass sheet and maximum tempering fluid flow in the area adjacent the cantilevered support arms of the support ring.

The present invention contemplates a support ring which is adapted to receive an already-formed glass sheet, and shuttle same through a tempering station. The invention further contemplates a support ring which participates in the glass sheet forming operation prior to the formed glass sheet tempering operation. In other words, the support ring of the present invention can additionally serve as a press bending rail or gravity forming mold, and can thereafter immediately be used to support and shuttle the formed glass sheet during a subsequent tempering operation.

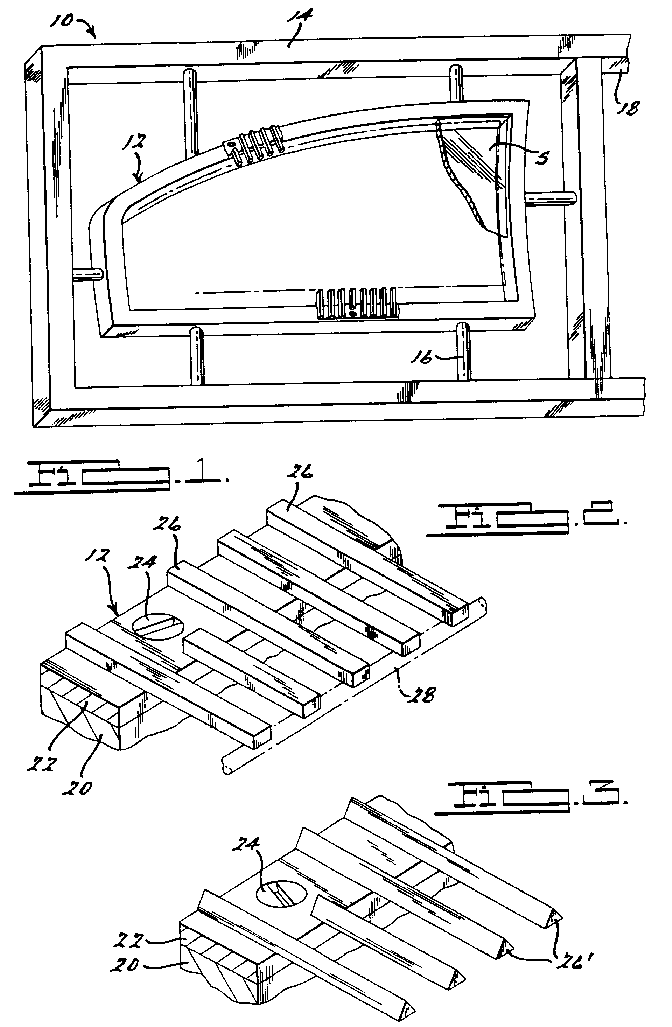

Referring now to the drawings, and in particular to Fig. 1, there is shown generally at 10 a support ring system embodying the features of the present invention. The support ring 12 itself is affixed to a generally rectangular frame 14 by means of a plurality of connecting rods 16. The support ring frame 14 may be shuttled into and out from a tempering station by means of conventional mechanical apparatus (not shown) such as, for example, robotically operated positioning arms connected to extensions 18 of the frame 14.

As illustrated more clearly in Figs. 2 and 3, the support ring comprises, inter alia, a support rail 20, having a support bar 22 affixed thereto by means of a plurality of screws 24. The support rail 20 generally conforms in outline and elevation to the peripheral marginal surface of a formed glass sheet S deposited or formed thereon. The support bar 22 includes a plurality of rigidly attached, generally parallel, horizontal, spaced-apart, cantilevered support arms 26 or 26', which extend from a line which is parallel to the support rail 20 inwardly toward a point medial the support rail 20. An optional stabiliser bar 28 (illustrated in Fig. 2 in phantom lines), having any well-known cross-sectional configuration, may be affixed to the under-side, inwardly pointing, proximal ends of the cantilevered support arms 26. The support arms 26 and 26' are cantilevered in relationship to the support rail 20, such that the glass sheet S rests only upon the cantilevered portions of the support arms 26 or 26', and the periphery of the glass sheet S is at all points medial the support rail 20. In the illustrated embodiments, the distal portions of the support arms 26 and 26' are affixed to the support rail 20 via attachment to the support bar 22 which in turn is fastened to the support rail 20 by means of screws 24. In this configuration, the entire peripheral marginal surface of the glass sheet S, except those portions of the surface contacted by the cantilevered portions of the support arms 26 or 26', is exposed to the perpendicular blast of tempering fluid, without interference from the support rail 20.

As will be readily apparent to those ordinarily skilled in the art, the cantilevered support arms 26 and 26' may be attached to the support bar 22 by conventional means such as, for example, by welding together same. Alternatively, the cantilevered support arms 26 or 26', and support bar 22 may be fabricated from a singular piece of bar stock by well-known methods such as, for example, machining. The stabiliser bar 28, when included, may conveniently be welded to the under-side, inwardly pointing, proximal ends of the cantilevered support arms 26.

The cross-sectional configuration of the cantilevered support arms 26 or 26', and spacing therebetween, may be altered to achieve the desired glass sheet tempering characteristics. Clearly, decreased contact with the glass sheet S and increased ability to accommodate horizontal tempering fluid flow will result in more uniform tempering. Fig. 3, in comparison to Fig. 2, illustrates cantilevered support arms 26' which would result in line contacts with the peripheral marginal surface of a glass sheet S resting thereupon. It must be noted that other cantilevered support arms cross-sectional configurations, e.g., a circle, would likewise result in such line contacts. Conversely, the square cross-sectional configuration illustrated in Fig. 2 results in surface contacts between the cantilevered support arms 26 and the peripheral marginal surface of the glass sheet S. Alternatively, the cantilevered support arms 26 may be angled at an orientation which is not perpendicular to the edge of the glass sheet, to eliminate "pie crusting."

A critical aspect of the present invention is that the cantilevered support arms 26 or 26' provide a horizontal flow path between the peripheral marginal surface of the glass sheet S and the support rail 20. In the embodiments illustrated in Figs. 2 and 3, the critical flow path is defined by the distance between the upper surface of the support bar 22 and the peripheral marginal surface of the glass sheet S, the spacing between adjacent cantilevered support arms 26 or 26', and the cross-sectional configuration of the cantilevered support arms 26 or 26'. Preferred materials of construction from which the support rail 20, support bar 22, cantilevered support arms 26 and 26', and optional stabiliser bar 28, may be made include various grades of stainless steel. Furthermore, the cantilevered support arms may be coated with an insulating material such as, for example, boron nitride deposited by the well-known plasma spray process, to further reduce the amount of conductive heat transfer between the peripheral marginal surface of the glass sheet and the cantilevered support arms.

While certain representative embodiments and details have been shown for the purpose of illustrating the present invention, it will be apparent to those ordinarily skilled in the art that various changes in applications can be made therein. For example, the apparatus of the present invention may be used to support flat as well as formed glass sheets. It is well-known in the glass industry that certain architectural glazings must be made from flat tempered glass, and the present invention may be utilised for supporting a flat glass sheet during such a tempering operation.

## Claims

1. Apparatus for supporting a glass sheet comprising a support ring including a support rail (20) generally conforming in outline and elevation to the peripheral marginal surface of the glass sheet (5), and a plurality of generally parallel, horizontal, spaced-apart members (26,26) mounted on the support rail characterised in that the spaced-apart members (26,26) are cantilevered support arms (26,26) extending from a line which is parallel to the support rail (20) inwardly toward a point medial the support rail and the apparatus further includes means (22,24) for affixing the distal portions of the cantilevered support arms to the support rail.

2. An apparatus for supporting a glass sheet according to Claim 1, wherein the cantilevered support arms (26,26) have a geometry which would result in line contacts between said support arms and the peripheral marginal surface of the glass sheet (5) supported thereon.

3. An apparatus for supporting a glass sheet according to Claim 1, wherein the cantilevered support arms (26,26) have a geometry which would result in surface contacts between said support arms and the peripheral marginal surface of the glass sheet (5) supported thereon.

4. An apparatus for supporting a glass sheet according to Claim 1, further comprising a stabiliser bar (28) affixed to the under-side of the inwardly pointing, proximal ends of the cantilevered support arms (26,26).

## Patentansprüche

1. Eine Apparatur, um eine Glastafel zu tragen, wobei die Apparatur einen Stützring mit einer Trageschiene (20), deren Umriß und Grundriß mit der umgebenden Randfläche der Glastafel (5) im wesentlichen übereinstimmt, sowie eine Vielzahl von im wesentlichen parallelen, horizontalen, untereinander getrennten Bauteilen (26, 26') umfaßt, die auf der Trageschiene angebracht sind, dadurch gekennzeichnet, daß die untereinander getrennten Bauteile (26, 26') freitragende Tragearme (26, 26') sind, die sich von einer parallel zur Trageschiene (20) verlaufenden Linie aus nach innen zu einem Punkt in der Mitte der Trageschiene erstrecken, und daß die Apparatur weiterhin Vorrichtungen (22, 24) umfaßt, um die enffernt liegenden Teile der freitragenden Tragearme an der Trageschiene zu befestigen.

2. Eine Apparatur, um eine Glastafel zu tragen, nach Anspruch 1, worin die freitragenden Tragearme (26, 26') eine Geometrie besitzen, die einen Kontakt entlang einer Linie zwischen diesen Tragearmen und der umgebenden Randfläche der darauf stützenden Glastafel (5) ergeben würden.

3. Eine Apparatur, um eine Glastafel zu tragen, nach Anspruch 1, worin die freitragenden Tragearme (26, 26') eine Geometrie besitzen, die einen Kontakt entlang einer Oberfläche zwischen diesen Tragearmen und der umgebenden Randfläche der darauf stützenden Glastafel (5) ergeben würden.

4. Eine Apparatur, um eine Glastafel zu tragen, nach Anspruch 1, die ferner einen Stabilisierbalken (28) umfaßt, der an der Unterseite der nach innen gerichteten, proximalen Enden der freitragenden Tragearme (26, 26') befestigt ist.

## Revendications

1. Dispositif destiné à supporter une feuille de verre, comprenant un anneau de support comportant une barre de support (20) se conformant généralement en profil et en élévation à la surface de bord périphérique de la feuille de verre (5), et une pluralité d'éléments espacés, horizontaux, généralement parallèles (26, 26') montés sur la barre de support, caractérisé en ce que les éléments espacés (26, 26') sont des bras de support en porte-à-faux (26, 26') s'étendant à partir d'une ligne qui est parallèle à la barre de support (20) vers l'intérieur en direction d'un point situé au centre de la barre de support, et en ce que le dispositif comprend en outre des moyens (22, 24) destinés à fixer les parties distales des bras de support en porte-à-faux à la barre de support.

2. Dispositif destiné à supporter une feuille de verre selon la revendication 1, dans lequel les bras de support en porte-à-faux (26, 26') présentent une géométrie qui entraîne un contact suivant une ligne entre lesdits bras de support et la surface de bord périphérique de la feuille de verre (5) supportée sur ceux-ci.

3. Dispositif destiné à supporter une feuille de verre selon la revendication 1, dans lequel les bras de support en porte-à-faux (26, 26') présentent une géométrie qui entraîne un contact superficiel entre lesdits bras de support et la surface de bord périphérique de la feuille de verre (5) supportée sur ceux-ci.

4. Dispositif destiné à supporter une feuille de verre selon la revendication 1, comprenant en outre une barre stabilisatrice (28) fixée au dessous des extrémités proximales, dirigées vers l'intérieur, des bras de support en porte-à-faux (26, 26').
